# EUROPÄISCHE PATENTSCHRIFT

(11) **EP 3 221 662 B1**
(45) Veröffentlichungstag und Bekanntmachung des Hinweises auf die Patenterteilung: **16.03.2022**
(21) Anmeldenummer: 15723152.3
(22) Anmeldetag: 29.04.2015
(51) Int. Cl.: G01C 21/12, H04W 4/02

(54) **VORRICHTUNG UND VERFAHREN ZUR ERMITTLUNG MINDESTENS EINER POSITION EINES MOBILEN ENDGERÄTES**
DEVICE AND METHOD FOR DETERMINATION OF AT LEAST ONE POSITION OF A MOBILE TERMINAL
DISPOSITIF ET MÉTHODE POUR DÉTERMINER AU MOINS UNE POSITION D'UN DISPOSITIF TERMINAL

(30) Priorität: 20.11.2014 DE 102014223668
(43) Veröffentlichungstag der Anmeldung: 27.09.2017
(73) Patentinhaber: Bayerische Motoren Werke Aktiengesellschaft, 80809 München (DE)
(72) Erfinder: KARG, Michael, 85386 Eching (DE); SPIES, Christian, 81541 München (DE)
(86) Internationale Anmeldenummer: PCT/EP2015/059302
(87) Internationale Veröffentlichungsnummer: WO 2016/078778

(56) Entgegenhaltungen:
- EP-A1- 2 426 511
- EP-A2- 1 865 286
- US-A1- 2014 082 952
- PETER WIDHALM ET AL: "Transport mode detection with realistic Smartphone sensor data", PATTERN RECOGNITION (ICPR), 2012 21ST INTERNATIONAL CONFERENCE ON, IEEE, 11 November 2012 (2012-11-11), pages 573-576, XP032329395, ISBN: 978-1-4673-2216-4

## Beschreibung

Die Erfindung betrifft eine Vorrichtung und ein Verfahren zur Ermittlung mindestens einer Position eines mobilen Endgerätes, insbesondere eines Smartphones.

Es sind Systeme bekannt, mit denen die Position eines mobilen Endgerätes direkt durch satellitengestützte Signale bestimmt werden kann. Solche Systeme sind als globale Navigationssatellitensysteme (GNSS) bekannt und umfassen unter anderem das GPS System, das GLONASS und die im Aufbau befindlichen Systeme Galileo und BeiDou. Diese Systeme sind jedoch auf den Empfang von Signalen der Satelliten angewiesen, da diese die Position mittels Signallaufzeiten zwischen Satellit und dem mobilem Endgerät über Multilateration bestimmen. Durch Hindernisse können diese Signale reflektiert werden und die Laufzeit erhöht sich, wodurch die Positionsbestimmung an Genauigkeit verliert. Durch Blockieren der Signale, insbesondere in Gebäuden oder im Untergrund, ist eine Positionsbestimmung nicht möglich.

Eine bekannte Möglichkeit, die Nachteile von GNSS Systemen zu lösen, stellen Systeme dar, welche Signale von GSM Masten oder WiFi Stationen in ihrer Nähe auswerten. Hierbei ist es erforderlich, aus einer Speichereinrichtung die Standorte der sich in der Nähe befindlichen GSM Masten und WiFi Stationen zu empfangen und dann die relative Position zu diesen GSM Masten und WiFi Stationen per Triangulation zu bestimmen. Ein solches Verfahren ist in US 5,519,760 A allgemein und in DE 10 2007 014 528 A1 zur Routenbestimmung in U-Bahnen beschrieben. Der Nachteil dieser Verfahren ist, dass zunächst eine Datenbank mit den Positionen aller GSM Masten und WiFi Stationen erstellt werden muss. Dieses Kartographieren ist sehr aufwändig und teuer. Darüber hinaus sind die individuellen GSM Masten nicht immer eindeutig zu identifizieren. Letzteres ist zum Beispiel der Fall, wenn verschiedene GSM Masten zu einem sogenannten virtuellen Zugangspunkt zusammengeschlossen werden, wie es in U-Bahn Systemen häufig der Fall ist. Dabei können einzelne Zugangspunkte nicht mehr oder nur sehr grob einer Position zugeordnet werden. Dies gilt analog auch für WiFi Stationen.

Weitere Systeme benötigen den Aufbau einer neuen Infrastruktur. Dies ist teuer und führt zu einer unnützen Belegung von Frequenzbändern.

Eine Möglichkeit, die Nachteile von Systemen, welche externe Signalquellen benötigen, zu umgehen, ist die Verwendung eines inertialen Navigationssystems (INS). Ein INS verwendet eine Kombination aus Beschleunigungssensoren und Gyroskopen um die Bewegung von im Raum frei beweglichen Körpern zu messen. So ist es theoretisch möglich, bei einer bekannten Startposition und Orientierung, ohne die Verwendung externer Signale, eine Positionsbestimmung vorzunehmen. In der Praxis stellt sich jedoch das Problem, dass durch Sensordrift die Positionsbestimmung über die Zeit schnell an Genauigkeit einbüßt. Daher wird ein INS vorwiegend eingesetzt, um kurze Signalausfälle anderer Navigationssysteme, wie GNSS, zu überbrücken.

Die EP 1 865 286 A2 beschreibt ein System, bei dem eine Position ausgehend von einer Anfangsposition durch Messung des Ganges eines Menschen ermittelt werden kann. Die US 2014 / 0082952 A1 beschreibt, dass mittels eines magnetischen Sensors festgestellt werden kann, wenn ein Zug oder Auto fährt.

Die EP 2 426 511 A1 beschreibt ein System, bei dem eine Position unter Verwendung einer GPS-Einrichtung bestimmt wird. Darüber hinaus kann ein Bewegungspfad in einem öffentlichen Verkehrsmittel auch unter Verwendung eines durch einen Elektromotor gestörten Sensors angegeben werden.

Ausgehend von diesem Stand der Technik stellt sich die Aufgabe, eine Vorrichtung oder ein Verfahren bereit zu stellen, welches die vorgenannten Nachteile adressiert. Insbesondere soll eine Vorrichtung zur effizienten Positionsbestimmung geschaffen werden. Eine weitere Aufgabe ist es, eine Vorrichtung zur Positionsbestimmung bereit zu stellen, welche in der Lage ist, die Positionsbestimmung ohne zusätzliche Standortangaben durchzuführen. Des Weiteren soll eine Vorrichtung geschaffen werden, die eine Positionsbestimmung in einem Fahrzeug des öffentlichen Nahverkehrs in Tunneln und Haltestellen ermöglicht.

Diese Aufgabe wird gelöst durch eine Vorrichtung gemäß Anspruch 1 und ein Verfahren gemäß Anspruch 13.

Insbesondere wird die Aufgabe durch eine Vorrichtung gelöst, welche umfasst
- mindestens eine Speichereinrichtung;
- eine Magnetometer-Sensoreinheit zur Abgabe von Magnetometer-Sensordaten;
- eine Klassifikationseinheit;
- eine Positionsermittlungseinheit zur Bestimmung der Position des mobilen Endgerätes.

Die Klassifikationseinheit ist
a) zur Ermittlung von Zuständen von mindestens einem Elektromotor und/oder eines mittels mindestens eines Elektromotors angetriebenen Fahrzeugs unter Verwendung der Magnetometer-Sensordaten und
b) zur Speicherung der ermittelten Zustände in der mindestens einen Speichereinrichtung ausgebildet.

Die Positionsermittlungseinheit liest die Zustände aus der mindestens einen Speichereinrichtung aus und bestimmt mit Hilfe der Zustände die mindestens eine Position des mobilen Endgerätes, wobei die Klassifikationseinheit zur Ermittlung von mindestens einem ersten Motorzustand und mindestens einem zweiten Motorzustand ausgebildet ist, wobei der erste Zustand angibt, dass an dem Elektromotor eine Antriebsspannung anliegt und/oder der zweite Zustand angibt, dass an dem Elektromotor keine Antriebsspannung anliegt.

Einem Elektromotor liegt das Prinzip zu Grunde, dass elektrische Energie in mechanische Energie umgewandelt wird. Hierzu wird die Kraft, die ein Magnetfeld auf die stromdurchflossenen Leiter einer Spule ausübt in mechanische Energie umgesetzt. Die auftretenden Effekte sind auch außerhalb eines Elektromotors mit einem entsprechenden Sensor messbar. So ändert sich zum Beispiel der Betrag der magnetischen Flussdichte mit dem gewünschten Drehmoment bzw. der Drehzahl des Elektromotors. Es ist daher möglich, durch Messung des magnetischen und/oder elektrischen Feldes (z.B. Ausrichtung oder Stärke), die Zustände des Elektromotors zu bestimmen. Zur Messung der Effekte kann ein mobiles Endgerät eingesetzt werden.

Vorzugsweise sind die Komponenten des mobilen Endgeräts hoch integriert und das mobile Endgerät ist für den Benutzer tragbar, wie zum Beispiel ein modernes Smartphone. Ein solches modernes Smartphone hat für gewöhnlich einen Magnetometer-Sensor um einem digitalen Kompass zu implementieren. Dies kann ein Sensor zur Messung von 9-Freiheitsgraden, wie der Invensense MPU-9250, sein, welcher einen Hall Sensor zur Messung der magnetischen Flussdichte nutzt. Diese Magnetometer-Sensoreinheit kann verwendet werden, um beispielsweise die magnetische Flussdichte oder andere charakteristische Feldeigenschaften des durch einen Elektromotor induzierten Feldes zu messen und Magnetometer-Sensordaten an eine Klassifikationseinheit zu übergeben. In einer anderen Ausführungsform können die Magnetometer-Sensordaten in den Speicher des mobilen Endgerätes geschrieben werden.

Es ist ferner möglich, eine Förster-Sonde zur Messung der Feldeigenschaften zu verwenden.

In einer weiteren Ausführungsform der Erfindung implementiert das mobile Endgerät eine Klassifikationseinheit, welche die Magnetometer-Sensordaten empfängt und eine Klassifikation dieser Magnetometer-Sensordaten vornimmt. Hierzu können einzelnen Abschnitten der Magnetometer-Sensordaten Zustände zugeordnet werden. Mit Hilfe der Zustände kann die Positionsermittlungseinheit nun eine Position ermitteln.

Positionsbestimmung kann im Rahmen der vorliegenden Erfindung bedeuten:
- die Ermittlung einer absoluten Position im Raum;
- und/oder die Ermittlung einer relativen Position;
- und/oder die Ermittlung eines Ereignisses, welches in einer zeitlichen Beziehung zu einer Position steht.

In einer vorteilhaften Ausprägung kann der Benutzer ein Passagier einer U-Bahn sein. Der Benutzer wird informiert, wenn er seine gewünschte Haltestelle erreicht hat, damit er das Aussteigen nicht vergisst. Den Zeitpunkt könnte ein Smartphone alleine aus den Daten einer Magnetometer-Sensoreinheit bestimmen. Die Klassifikationseinheit könnte die Zustände der U-Bahn ermitteln. Dies könnte der Zustand während der Beschleunigung und/oder während des Stillstands des Fahrzeugs sein. Die Positionsermittlungseinheit, die jedes Paar von Beschleunigungs- und Stehvorgängen als das Zurücklegen einer Verbindung zwischen zwei Stationen interpretieren kann, würde den Benutzer nach einer von ihm vorgegebenen Anzahl an Stationen rechtzeitig über seine Ankunft informieren.

In einer weiteren Ausführungsform können die Signale von sich im Empfangsbereich des mobilen Endgerätes befindlichen GSM Masten, WiFi Stationen und GPS Satelliten zur genaueren Positionsbestimmung genutzt werden. Die Signale können als zusätzliche Information in die Positionsschätzung einbezogen werden und so die Verlässlichkeit der Schätzung verbessern.

In einer weiteren Ausprägung der Erfindung können aus den zusätzlichen Signalen von GSM Masten und WiFi Stationen Standortdaten erzeugt werden um ein Maß für die Güte der Positionsschätzung zu definieren. Solche Standortdaten sind durch öffentliche Schnittstellen zu Diensten verfügbar, beispielsweise durch Schnittstellen im Google Android System. Die Standortdaten können nun genutzt werden, um eine Aussage über die Güte der Positionsschätzung zu ermitteln. Ein Vorteil ist, dass der Nutzer über die Qualität der aktuellen Schätzung informiert werden kann.

Die Positionsermittlungseinheit kann zur Verwendung eines deterministischen oder eines nicht deterministischen Verfahrens ausgebildet sein. In einer Ausgestaltung kann zum Beispiel ein deterministischer Entscheidungsbaum verwendet werden um die Position zu bestimmen. In einer anderen Ausgestaltung könnte die Positionsermittlungseinheit zur Verwendung eines probabilistischen Verfahrens, wie zum Beispiel
- Sequentielle Monte Carlo Methode,
- Dynamisches Bayessches Netz oder
- Kalman Filter
ausgebildet sein.

In einer vorteilhaften Ausführung, in der die Positionsermittlungseinheit zur Verwendung einer sequentiellen Monte Carlo Methode ausgebildet ist, wird eine Wolke bzw. ein Schwarm sogenannter Partikel erzeugt, die mögliche Positionen des mobilen Endgerätes darstellen. Jedes Partikel ist ein Tupel mit mindestens zwei Werten, die ein Gewicht und einen Punkt im Zustandsraum umfassen. Dabei soll der Schwarm als Ganzes die Wahrscheinlichkeitsdichte in einem Anfangszustand repräsentieren. Jedem einzelnen Partikel wird nun mittels eines Modells der Systemdynamik, in dem vorliegenden Fall die in der Speichereinheit abgelegten Zustände, eine oder mehrere Lösungskurven, also Positionen, zugeordnet. Ausgehend von den Messwerten, wie zum Beispiel die zusätzlichen Signaldaten, und den Vorhersagen über die Position werden die Gewichte der Partikel angepasst. Hieraus ergibt sich in sequenzieller Weise eine verbesserte Schätzung der Evolution der Wahrscheinlichkeitsdichte im Zustandsraum. So kann die anfängliche Zusammensetzung des Schwarms angepasst werden, um genauere Ergebnisse zu erhalten. Der Übergang von der gewichteten Partikelwolke zur Wahrscheinlichkeitsdichte kann mit Methoden der nichtparametrischen Dichteschätzung erfolgen. Dies erlaubt eine Positionsschätzung, welche sich mit dem Abfahren von mehreren Stationen und den damit einhergehenden Messungen verbessert.

In einer Ausführungsform kann die Klassifikation in der Klassifikationseinheit eine Stützvektor Maschine ("Support Vector Machine", SVM) oder eine Lineare Diskriminanzanalyse (LDA) nutzen. Hierzu wird ein aufgezeichneter Signalverlauf eines Zeitintervalls von Magentormeter-Sensordaten durch ein Polynom m-ten Grades interpoliert, wobei m=3 eine vorteilhafte Wahl darstellt. Die Koeffizienten dieses Polynoms können zusammen mit anderen Eigenschaften des Signals, wie der Amplitude der Feldstärke über die Zeit oder die Steigungsänderung der Feldstärke über die Zeit als Punkt in einem n-dimensionalen Hyperraum interpretiert werden. Eine zuvor mit Trainingsdaten trainierte SVM oder LDA ist nun in der Lage, eine Aussage darüber zu treffen, in welchem Zustand der Elektromotor oder das mittels des Elektromotors angetriebene Fahrzeug operiert. Die Vorteile liegen dabei in der schnellen und zuverlässigen Klassifikation sowie der kompakten Repräsentation der Klassifizierungsregeln.

In einer weiteren vorteilhaften Ausführungsform weist die Vorrichtung eine Klassifikationseinheit auf, die Zustände aus einer endlichen Menge von Zuständen mit einer Kardinalität von weniger als 10, insbesondere weniger als 5, ermittelt. Dies hat den Vorteil die Klassifizierung der einzelnen Fahrabschnitte zu vereinfachen und so die Anzahl korrekt erkannter Zustände zu erhöhen.

In einer Ausführung könnten die Zustände die Betriebszustände des Motors eines Fahrzeugs repräsentieren. Mögliche Zustände wären AKTIV und INAKTIV, wobei AKTIV den Zustand bezeichnet, in dem an dem Elektromotor eine Betriebsspannung anliegt und INAKTIV den Zustand bezeichnet, in dem keine Betriebsspannung anliegt. Die Vorteile einer solchen Zustandswahl liegen in dem geringen Informationsverlust durch eine sonst zu hohe Abstraktionsebene und der geringen Fehlerquote in der Klassifizierung, da die Zustandswahl den verwendeten Magnetometer-Sensordaten leicht zuzuordnen ist. Des Weiteren ist eine Verfeinerung der Zustandsmenge, also eine detailliertere Abbildung der Betriebszustände des Motors, bei fortschreitender Technologie einfach möglich.

In einer weiteren Ausführung könnten die Zustände Feldzustände sein. So können alle Werte unterhalb eines Schwellwertes zu einem Feldzustand NIEDRIG und alle Werte oberhalb eines Schwellwertes zu einem Feldzustand HOCH zählen. In einer weiteren Ausprägung könnten die Feldzustände STEIGEND und KONSTANT sein, wobei STEIGEND bedeutet, dass die Signalwerte über die Zeit ansteigen und KONSTANT dass die Signalwerte über die Zeit konstant sind. Ein Vorteil einer solchen Wahl von Zuständen ist, dass keine Annahmen über externe Komponenten wie dem Motor oder das Fahrzeug gemacht werden müssen sondern nur auf den vorhandenen Daten gearbeitet wird.

In einer weiteren Ausführung können mögliche Zustände BESCHLEUNIGEN, welcher den Fahrabschnitt vom Stillstand bis zu einer konstanten Geschwindigkeit oder eines Bremsvorganges darstellt, und STEHEN, welcher den Fahrabschnitt zwischen dem Abbremsen und dem Beschleunigen des Fahrzeugs symbolisiert, sein. Hier liegen die Vorteile in dem Anreichern der reinen Motordaten mit einer Semantik, die diese Motordaten in den Kontext des Fahrzeugs setzten. Dies ermöglicht eine einfachere Analyse der Daten und somit eine einfachere Entwicklung der weiteren Komponenten der Vorrichtung im Kontext der Positionsbestimmung des Fahrzeugs.

Darüber hinaus können in einer weiteren Ausführung mögliche Zustände KONSTANTEFAHRT, wobei KONSTANTEFAHRT repräsentiert, dass sich das Fahrzeug mit einer nahezu konstanten Geschwindigkeit bewegt, und BREMSEN, welcher angibt, dass das Fahrzeug aktiv einen Bremsvorgang durchführt, sein. Der Zustand BREMSEN kann bei Fahrzeugen, welche über eine Einheit zur Energierückgewinnung beim Bremsen verfügen, besonders effizient erkannt werden. Dies ist auf Wechselwirkungen der Einheit zur Energierückgewinnung mit dem Magnetfeld zurückzuführen.

In einer weiteren Ausführungsform können zusätzlich zu den Magnetometer-Sensordaten auch Metainformationen, die mit den Sensordaten in Bezug stehen oder gesetzt sind, gespeichert werden. Dies können zum Beispiel Zeitstempel sein, die eine einfachere Weiterverarbeitung der Daten erlauben. Auch ergibt sich die Möglichkeit Berechnungen, wie zum Beispiel das Ermitteln der Amplitude oder der Steigung, parallel zum Aufzeichnen durchzuführen und diese mit dem Signal zu speichern wodurch freie Ressource effizient genutzt werden können.

Eine vorteilhafte Ausgestaltung der Erfindung sieht vor, dass das mobile Endgerät in der Lage ist, Netzdaten zu empfangen, welche den Netzplan eines öffentlichen Nahverkehrs repräsentieren. In diesen Daten könnten die Stationen und die Verbindungen mit den korrespondierenden Fahrzeiten und Distanzen in dem öffentlichen Nahverkehr gespeichert sein. Würde der Nutzer eines solchen mobilen Endgerätes seine Startposition, sein gewähltes Verkehrsmittel und seine Endhaltestelle angeben, so könnte die Vorrichtung in dem Moment eine Warnung zum Aussteigen ausgeben, in dem der Fahrgast seine Zielhaltestelle erreicht hat. Dies wird erreicht, in dem die Positionsermittlungseinheit ermittelt, wie viele Stationen mit dem gewählten Verkehrsmittel zwischen Start- und Zielhaltestelle liegen.

In einer weiteren Ausführung vergleicht der Klassifikator die charakteristischen Signalverläufe der Magnetometer-Sensordaten aus der Speichereinheit mit neuen Messdaten. Aufgrund eines Vergleichsparameters, zum Beispiel der Amplitude des Signals, kann eine Klassifizierung durchgeführt werden. Dies hat den Vorteil einer einfachen und schnellen Klassifikation.

In einer weiteren Ausprägung kann die mindestens eine Speichereinheit so geartet sein, dass sie die Magnetometer Sensordaten als Koeffizienten eines interpolierenden Polynoms speichert, welche zum Beispiel als Koordinaten in einem Hyperraum für die Klassifikation verwendet werden können. Dies verringert den Speicherbedarf erheblich und ist gerade deshalb besonders in einem mobilen Endgerät von Vorteil, bei dem es typischerweise Speicherengpässe gibt.

In einer weiteren Ausführung kann das mobile Endgerät mindestens einen Druckmesser umfassen. Unter Verwendung der Sensordaten des Druckmessers kann ermittelt werden, ob das mobile Endgerät bzw. dessen Benutzer das Stockwerk eines Gebäudes gewechselt hat. Zum Beispiel könnte das Hinabsteigen in eine U-Bahn Station erkannt werden. Darüber hinaus ist es denkbar zu erkennen, ob der Benutzer das Stockwerk innerhalb einer U-Bahn Station gewechselt hat. Dies könnte ein Indikator für einen Wechsel der U-Bahn Linie sein. Die Klassifikationseinheit kann zur Verwendung von Druck-Sensordaten ausgebildet sein, um Druckzustände zu ermitteln. Die Zustände können von der Positionsermittlungseinheit verwendet werden, um die Genauigkeit der Positionsschätzung zu verbessern.

Des Weiteren wird die Aufgabe gelöst durch ein Verfahren zur Bestimmung der Position eines mobilen Endgerätes, insbesondere mittels einer Vorrichtung,wie sie in den vorhergehenden Ausführungen beschrieben wurde, umfassend die Schritte:
a) Detektieren von magnetischen und/oder elektrischen Felddaten eines Elektromotors;
b) Speichern der magnetischen und/oder elektrischen Felddaten in einer mindestens einen Speichereinrichtung;
c) Klassifizieren eines Zustandes des Elektromotors oder eines mittels des Elektromotors angetriebenes Fahrzeug unter Verwendung der gespeicherten Felddaten;
d) Speichern der Zustände in der mindestens einen Speichereinrichtung;
e) Bestimmen einer Position des mobilen Endgerätes mit Hilfe der in der mindestens einen Speichereinheit stehenden Zustände,
wobei die Zustände die Zustände AKTIV oder INAKTIV umfassen, wobei AKTIV den Zustand bezeichnet, in dem an dem Elektromotor eine Betriebsspannung anliegt und INAKTIV den Zustand bezeichnet, in dem an dem Elektromotor keine Betriebsspannung anliegt.

Es ergeben sich ähnliche oder identische Vorteile, wie dies bereits in Verbindung mit der Vorrichtung beschrieben wurde.

Die erfindungsgemäße Aufgabe wird des Weiteren gelöst durch ein Computerlesbares Speichermedium, das ausführbare Instruktionen aufweist, welche einen Computer dazu veranlassen das beschriebene Verfahren zu implementieren, wenn diese Instruktionen Ausgeführt werden.

Nachfolgend wird die Erfindung mittels mehrerer Ausführungsbeispiele beschrieben, die anhand von Abbildungen näher erläutert werden. Hierbei zeigen:
- Fig. 1: eine schematische Draufsicht auf eine U-Bahn 10 mit Drehstrom-Asynchronmotor 20 und eines ersten Smartphones 30;
- Fig. 2: ein Ablaufdiagramm der Positionsermittlung mittels des ersten Smartphones 30 nach Fig. 3;
- Fig. 3: das erste Smartphone 30 gemäß Fig. 1 mit Übersicht über die zur Positionsermittlung notwendigen Komponenten des ersten Smartphones 30;
- Fig. 4: eine Darstellung von Magnetometer-Sensordaten 60, die mittels einer Magnetometer-Sensoreinheit 31 aufgenommen wurden;
- Fig. 5: den Netzplan 62 eines öffentlichen Nahverkehrs, welcher zur Positionsermittlung gemäß Fig. 2 und Fig. 7, genutzt wird;
- Fig. 6: eine schematische Draufsicht auf die U-Bahn 10 mit Drehstrom-Asynchronmotor 20 gemäß Fig. 1 und einem zweiten Smartphone 30', wobei ein GSM Mast 50 und eine WiFi Station 40 in der Nähe zur U-Bahn 10 angeordnet sind;
- Fig. 7: eine zweite Möglichkeit der Positionsermittlung im Kontext der Anordnung aus Fig. 6.;
- Fig. 8: das zweite Smartphone 30' aus Fig. 6 mit Übersicht über die zur Positionsermittlung gemäß Fig. 7 notwendigen Komponenten;

In der nachfolgenden Beschreibung werden für gleiche und gleich wirkende Teile, dieselben Bezugsziffern verwendet.

Das Ziel der Positionsermittlung in einer ersten Ausführung ist es die Position eines Smartphones 30, welches in einer U-Bahn 10 mitgeführt wird, innerhalb eines Netzplans 62 des öffentlichen Nahverkehrs zu schätzen.

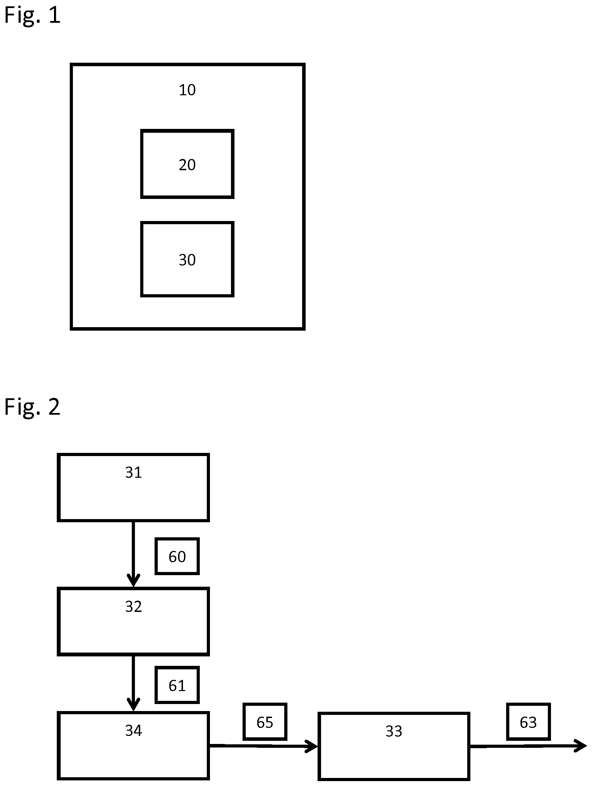

Fig. 1 zeigt eine schematische Draufsicht der U-Bahn 10, welche durch einen Drehstrom-Asynchronmotor 20 angetrieben wird und das erste Smartphone 30, welches von einem Passagier genutzt wird.

Der grundsätzliche Ablauf der Positionsermittlung des ersten Smartphones 30 ist in Fig. 2 dargestellt.

Zunächst nimmt eine Magnetometer-Sensoreinheit 31 die Feldeigenschaften des durch den Drehstrom-Asynchronmotor 20 induzierten magnetischen Feldes auf. Die Magnetometer Sensordaten 60 werden mit zugehörigen Zeitstempeln an eine Klassifikationseinheit 32 übergeben.

Im Anschluss wird den Magnetometer-Sensordaten 60 in der Klassifikationseinheit 32 ein Zustand 61 zugewiesen. Der jeweils ermittelte Zustand 61 wird darauf folgend in einer Speichereinrichtung 34 zusammen mit einem Zeitstempel abgespeichert.

Zu definierten Zeitpunkten, z.B. jede Minute oder nach jedem neuen gespeicherten Zustand, liest eine Positionsermittlungseinheit 33 Zustände 65 aus der Speichereinrichtung 34 aus. Aus den Zuständen 65 und den Zeitstempeln werden Fahrzeiten der U-Bahn 10 geschätzt. In Kombination mit dem Netzplan 62 und darin abgelegter Fahrzeiten zwischen Haltestellen ermittelt das erfindungsgemäße System eine Positionsschätzung 63.

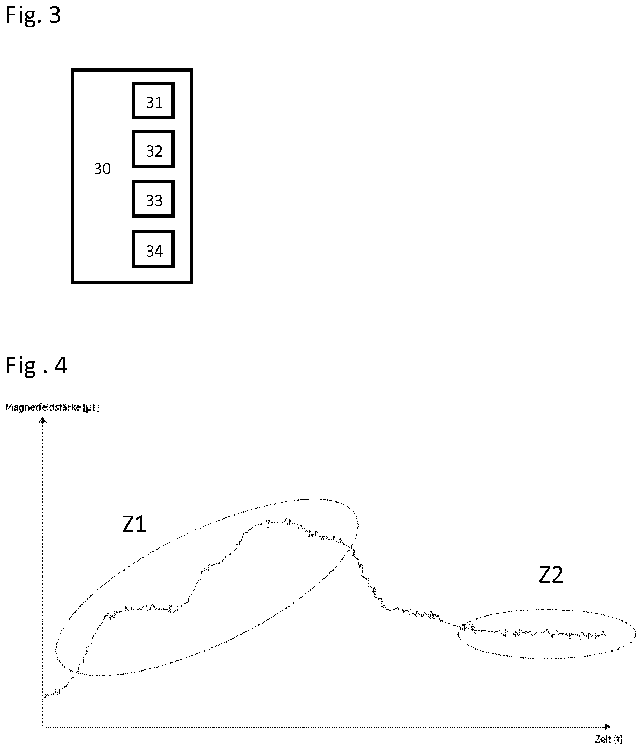

Fig.3 zeigt das erste Smartphone 30 mit den zur Positionsermittlung erforderlichen Komponenten. Das erste Smartphone 30 umfasst unter anderem die Magnetometer-Sensoreinheit 31, die Klassifikationseinheit 32, die Positionsermittlungseinheit 33 sowie die Speichereinrichtung 34.

Die Speichereinrichtung 34 ist als Flash-EEPROM Speicher ausgebildet. In der Speichereinrichtung 34 ist der Netzplan 62 eines öffentlichen Nahverkehrs abgespeichert. Erfindungsgemäß sind auch andere Ausbildungen der Speichereinrichtung 34 möglich, wie zum Beispiel eine Netzwerkspeicherlösung oder Internetspeicherlösung (Cloud-Speicher), welche die Daten an einem physisch getrennten Ort speichern.

Die Magnetometer-Sensoreinheit 31 ist eine Komponente eines 9-Freiheitsgrad-Sensors, welcher mit dem System-in-Package Integrationsansatz realisiert ist. Die weiteren Komponenten, welche die restlichen 6-Freiheitsgrade zur Verfügung stellen, sind ein Gyroskop sowie ein Beschleunigungssensor. Die Magnetometer-Sensoreinheit 31 stellt eine vektorielle Darstellung der Feldeigenschaften des vom Drehstrom-Asynchronmotor 20 induzierten magnetischen Feldes zur Verfügung. Die gemessenen Feldeigenschaften werden zusammen mit dem Aufnahmezeitpunkt als Tupel erfasst.

Fig. 4 zeigt Messwerte der magnetischen Feldstärke des Drehstrom-Asynchronmotors 20 während einer Fahrt der U-Bahn 10, die mit der Magnetometer-Sensoreinheit 31 des ersten Smartphones 30 erfasst wurden. Der Bereich in dem die U-Bahn 10 beschleunigt, und sich damit im Zustand BESCHLEUNIGEN Z1 befindet und der Bereich, in dem die U-Bahn 10 steht und sich damit im Zustand STEHEN Z2 befindet, sind hervorgehoben.

Die Klassifikationseinheit 32 der Fig. 3 ist als eine vorab mit annotierten Trainingsdaten trainierte Stützvektor-Maschine implementiert.

Die Stützvektor-Maschine interpretiert Eingabewerte als Punkte in einem Hyperraum. Die Eingabewerte werden aus den Magnetometer-Sensordaten 60 extrahiert. Mittels einer durch das Training ermittelten Hyperebene werden unterschiedliche Klassen separiert. Zur Klassifikation wird ermittelt, auf welcher Seite der Hyperebene sich ein Punkt befindet. Im ersten Ausführungsbeispiel sind die Dimensionen des Hyperraums die folgenden:
- Betrag der Magnetfeldstärke;
- n Dimensionen für die Koeffizienten eines interpolierenden Polynoms n-ten Grade, welches den zeitlichen Verlauf der Magnetfeldstärke interpoliert.

Des Weiteren speichert die Klassifikationseinheit 32 den ermittelten Zustand 61 zusammen mit einem Zeitstempel in der Speichereinrichtung 34.

Die Klassifikationseinheit 32 ist trainiert, um zwischen den Klassen der Zustände BESCHLEUNIGEN und STEHEN zu unterscheiden, wobei BESCHLEUNIGEN angibt, dass die U-Bahn 10 beschleunigt, und STEHEN angibt, dass die U-Bahn 10 stillsteht.

Die Positionsermittlungseinheit 33 interpretiert, die in der Klassifikationseinheit 32 ermittelten Zustände 65. So wird der Zustand BESCHLEUNIGEN Z1 so interpretiert, dass die U-Bahn 10 eine Station des Netzplans 62 verlässt und der Zustand STEHEN Z2 dahin gehend interpretiert, dass sich die U-Bahn 10 in einer Station des Netzplans 62 befindet. Nun wird die Fahrt von einer Station zur nächsten Station als Abfolge von einem BESCHLEUNIGEN Z1 und einem STEHEN Z2 Zustand angesehen. Mit Hilfe der, zusammen mit den Zuständen 65 gespeicherten, Zeitstempel wird außerdem für jede abgeschlossene Fahrt zwischen zwei Stationen eine geschätzte Fahrzeit der U-Bahn 10 ermittelt.

Die Positionsermittlungseinheit 33 ist zur Verwendung einer sequenziellen Monte-Carlo Methode ausgebildet. Die Positionsermittlungseinheit 33 verfährt in einer Vielzahl von Schritten und ist dazu ausgebildet die Daten des Netzplans 62 zu verwenden.

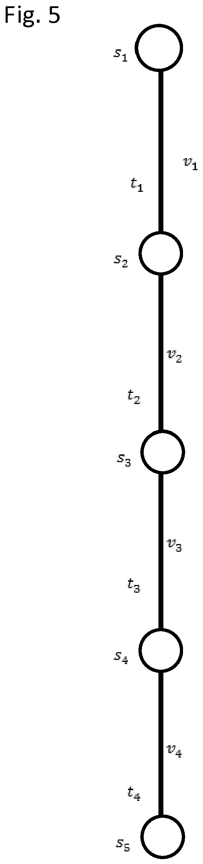

Der in Fig. 5 gezeigte und in der Speichereinrichtung gespeicherte Netzplan 62 enthält 5 Stationen *s*₁,...,*s*₅ sowie 4 Verbindungen *ν*₁,...,*ν*₄. Jede der Verbindungen verbindet zwei Stationen und ist einer dafür vorgesehene Fahrzeit *t*₁*,...,t*₄ zugeordnet. Der Netzplan 62 wird als ungerichteter Graph mit Knoten und diese verbindende Kanten interpretiert. Die Stationen des Netzplans 62 werden als die Knoten des Graphen und die Verbindungen des Netzplans als die Kanten des Graphen repräsentiert. Den Kanten des Graphen werden die Fahrzeiten *t*₁*,*...,*t*₄, der entsprechenden Verbindungen des Netzplans 62 als Gewichte zugeordnet.

Mit Hilfe dieser Informationen kann die Positionsermittlungseinheit 33 die Position des Smartphones 30 innerhalb des Netzplans 62 gemäß dem nachfolgenden Algorithmus schätzen:
In einer Initialisierungsphase werden sogenannte Partikel erzeugt. Dies sind 2-Tupel, welchen jeweils ein Knoten des Graphen und ein Partikel-Gewicht zugeordnet ist. Das Partikel-Gewicht ist eine positive, nicht notwendigerweise ganze, Zahl.

Für jeden Knoten des Graphen wird genau ein Partikel erzeugt. Die Partikel-Gewichte sind während der Initialisierung für alle Partikel gleich, z.B. 1.

Das weitere Vorgehen umfasst folgende Schritte:
1. Führe für jedes Partikel folgende Aktion durch: Addiere auf das Partikel-Gewicht für jede inzidente Kante des dem Partikel zugeordneten Knotens eine Zahl. Die Größe der Zahl hängt davon ab, wie groß der Betrag der Differenz zwischen der gemessenen Fahrzeit der U-Bahn 10 und dem Gewicht der inzidenten Kante im Graphen ist. Ist die Differenz für das Gewicht einer inzidenten Kante sehr klein so wird eine große Zahl auf das Partikel-Gewicht addiert. Bei einer großen Differenz wird eine kleine Zahl addiert.
2. Erzeuge eine neue Menge von Partikeln. Es wird dieselbe Anzahl von Partikeln erzeugt wie in der Initialisierungsphase. Die Zuordnung von Knoten zu Partikeln ergibt sich wie folgt: Die Wahrscheinlichkeit, dass einem Partikel ein bestimmter Knoten zugeordnet wird, hängt davon ab, wie groß das Partikel-Gewicht der Partikel aus Schritt 1. ist, die dem entsprechenden Knoten zugeordnet sind. Dabei kommt es zu einer Ballung von neuen Partikeln, denen solche Knoten zugeordnet sind, deren Partikel im Schritt 1. ein hohes Partikel-Gewicht zugeordnet wurde. In der weiteren Betrachtung werden nur die im Schritt 2. erzeugten Partikel betrachtet.

Der Knoten, der in diesem Schritt am häufigsten einem Partikel zugeordnet wurde repräsentiert die Station, welche dem Benutzer als aktuelle Positionsschätzung 63 ausgegeben wird. Gibt es mehrere Knoten, die in der gleichen Anzahl von Partikeln gesetzt sind, so wird ein Knoten aus diesen per Zufallsprinzip ausgewählt und eine Information über die Unsicherheit der Positionsermittlung an den Benutz ausgegeben.

3. Der Übergang der U-Bahn 10 von einer ersten Station zu einer zweiten Station wird simuliert. Hierzu wird angenommen, dass die U-Bahn 10 pro Fahrt immer nur eine der möglichen Verbindungen *ν*₁,...,*ν*₄ in dem Netzplan 62 fährt.

Um den Übergang zu simulieren werden alle Partikel so oft dupliziert, sodass es für jeden Knoten exakt so viele Partikel wie zu ihm inzidente Kanten gibt. Folgend wird für jedes Partikel der Knoten durch einen im Graphen adjazenten Knoten ausgetauscht.

Nun folgt Schritt 1.

In einer zweiten Ausführungsform, basierend auf der ersten Ausführungsform, ist die Positionsermittlungseinheit 32 zusätzlich zur Verwendung von WiFi Signalen 66 und GSM Signalen 67 ausgebildet. Dabei werden im Schritt 1. des vorherigen Abschnitts als Zusätzliche Kriterien die WiFi Signale 66 und GSM Signale 67 verwendet um das Gewicht der Partikel zu bestimmen.

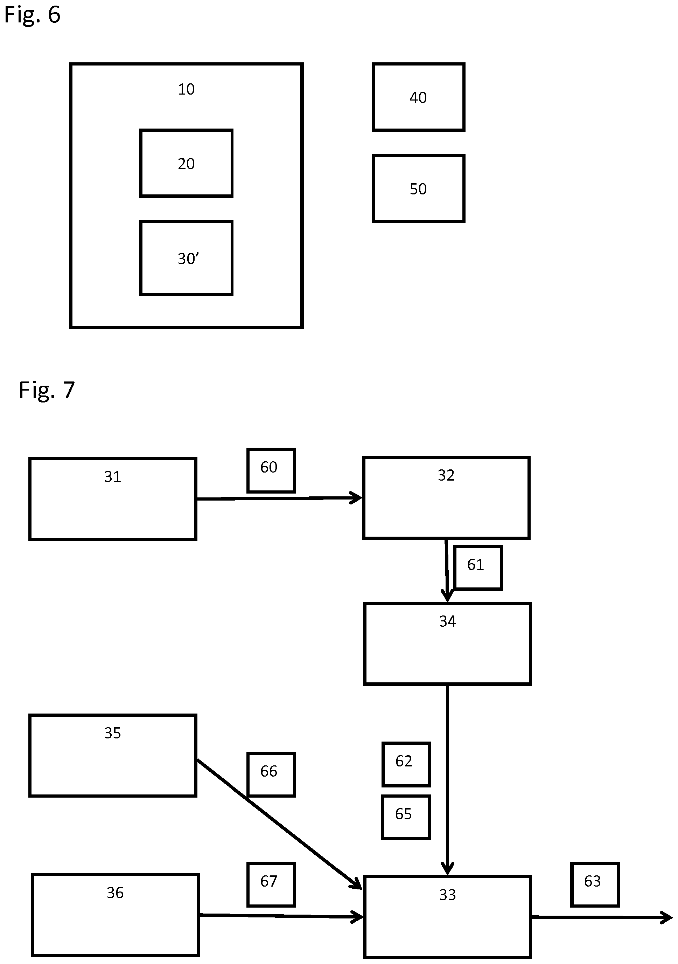

In Fig. 6 ist eine schematische Draufsicht gemäß Fig. 1 gezeigt. Darüber hinaus ist ein zweites Smartphone 30' in der U-Bahn 10 von einem Passagier geführt. In der Nähe der U-Bahn 10 sind ein GSM Mast 50 und eine WiFi Station 40 angeordnet.

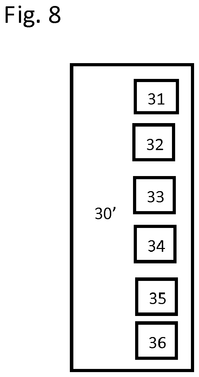

Fig. 7 zeigt den Ablauf der Positionsermittlung gemäß des zweiten Ausführungsbeispiels mittels des in Fig. 8 dargestellten zweiten Smartphones 30' und der Anordnung aus Fig. 6. Der Ablauf unterscheidet sich im Wesentlichen von dem Ablauf, welcher in Fig. 2 dargestellt ist durch das Verwenden von WiFi Signalen 66 und GSM Signalen 67 in der Positionsermittlungseinheit 33 um die Positionsschätzung 63 zu verbessern. Hierzu nimmt das zweite Smartphone 30' die WiFi Signale 66 einer WiFi Station 40 mit einer WiFi-Empfangseinheit 35 sowie die GSM Signale 67 eines GSM Mastes 50 mit einer GSM-Empfangseinheit 36 auf. Die WiFi Signale 66 und die GSM 67 Signale werden als zusätzliche Parameter an die Positionsermittlungsseinheit 33 übergeben.

Fig. 8 zeigt die Komponenten des zweiten Smartphones 30', welche zur Positionsermittlung gemäß Fig. 6 notwendig sind. Im Gegensatz zum ersten Smartphone 30 sind zusätzlich die GSM Empfangseinheit 36 und die WiFi Empfangseinheit 37 vorhanden.

In der zweiten Ausführungsform ist die Positionsermittlungseinheit 33 wie beschrieben zu Verwendung von GSM-Signalen 67 und WiFi-Signalen 66 ausgebildet. Hierzu muss der verwendete Algorithmus zur Positionsbestimmung aus der ersten Ausführungsform angepasst werden. Dies beschränkt sich im Wesentlichen auf Schritt 2. des Algorithmus:
Um eine bessere Positionsschätzung 63 zu erreichen, werden die GSM-Signale 67 und die WiFi-Signale 66 ausgewertet und sie können einer Menge von Stationen in dem Netzplan 62 zugeordnet werden. Dies setzt voraus, dass die GSM-Signale 67 und die WiFi-Signale 66 in dem Netzplan vorab kartographiert sind. Dies ist in der Regel der Fall und kann über öffentlich zugängliche Schnittstellen abgefragt werden.

In Schritt 2. des verwendeten Algorithmus erhalten nun alle Partikel, denen ein Knoten zugeordnet ist, der eine Station repräsentiert, in der die GSM-Signale 67 oder WiFi-Signale 66 vorkommen zusätzlich ein höheres Gewicht. Dies führt dazu, dass nicht nur die Fahrzeit als Messung in die Positionsschätzung 63 einfließt und so das Ergebnis verbessert wird.

In einer dritten Ausführungsform, basierend auf der ersten oder zweiten Ausführungsform, können in dem Netzplan 62 zusätzlich die Linien eines U-Bahn Systems enthalten sein. Die Positionsermittlungseinheit 32 ist derart ausgebildet, auch zu bestimmen auf welcher Linie sich der Passagier befindet um dadurch die Positionsermittlung robuster gegenüber Klassifikationsfehlern zu machen.

In einer vierten Ausführungsform der Erfindung, erhält der Passagier der U-Bahn 10 nach einer bestimmten Anzahl von Stationen eine Warnung zum Aussteigen.

Hierzu wird in der vierten Ausführungsform in der Speichereinheit 34 kein Netzplan 62 gespeichert.

In der vierten Ausführungsform ist die Positionsermittlungseinheit 33 durch ein deterministisches Verfahren umgesetzt. Konkret ist ein deterministischer Entscheidungsbaum implementiert. Der Entscheidungsbaum hat neben seinem Wurzelknoten lediglich ein erstes Blatt und ein zweites Blatt, also Knoten, die selber wieder keine Kinder haben.

In der vierten Ausführungsform wird eine Regel verwendet, welche bei Anliegen des Zustands BESCHLEUNIGEN Z1 das erste Blatt auswählt und bei Anliegen des Zustandes STEHEN Z2 das zweite Blatt.

Bei Auswahl des ersten Blattes wird eine Funktion "InformUser" aufgerufen, die eine mit 1 initialisierte Variable um 1 erhöht. Nun prüft die Funktion, ob eine maximale Anzahl MAX erreicht ist. In der vierten Ausführungsform wird der Wert der Variablen MAX vom Benutzer vorgegeben und gibt die Anzahl von maximal zu fahrenden U-Bahn Stationen an. Ist MAX erreicht wird der Benutzer informiert, dass sein Ziel erreicht ist. Bei dem Anliegen eines Zustandes STEHEN muss nichts weiter getan werden. Die Funktion "InformUser", die einen solchen Entscheidungsbaum implementiert ist im Folgenden als Pseudo-Code dargestellt:

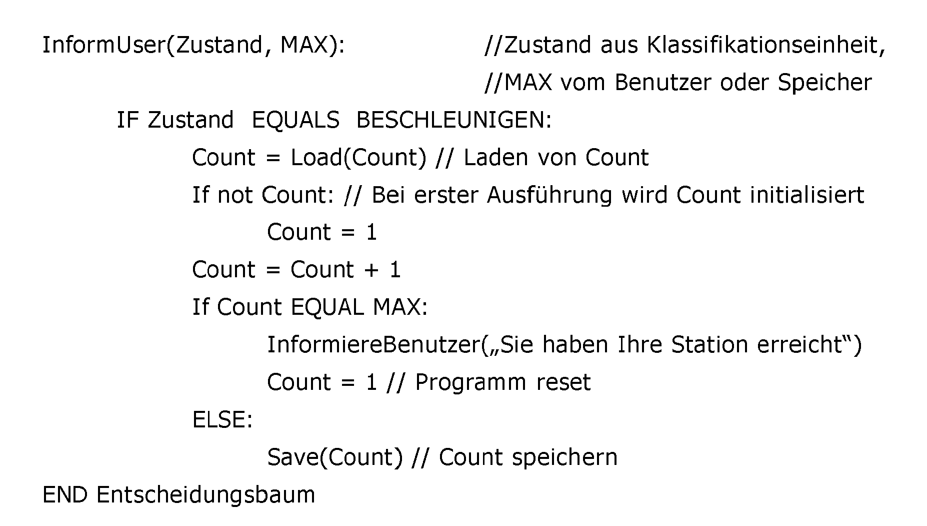

In den aufgezeigten Ausführungsformen ist es von Vorteil, dass die Klassifikationseinheit 32 und die Positionsermittlungseinheit 33 als Software umgesetzt sind, deren Instruktionen von einem Prozessor gelesen und ausgeführt werden können. Dies ist aus entwicklungstechnischer und wirtschaftlicher Sicht sinnvoll. Darüber hinaus sind aber auch Ausführungsformen denkbar, in denen die beiden Komponenten als dezidierte Hardware Komponenten umgesetzt sind.

### Bezuaszeichen:

- 10: U-Bahn
- 20: Drehstrom-Asynchronmotor
- 30: erstes Smartphone
- 30': zweites Smartphone
- 40: WiFi Station
- 50: GSM Mast
- 31: Magnetometer-Sensoreinheit
- 32: Klassifikationseinheit
- 33: Positionsermittlungseinheit
- 34: Speichereinrichtung
- 35: WiFi Empfangseinheit
- 36: GSM Empfangseinheit
- 60: Magnetometer-Sensordaten
- 61: Zustand
- 62: Netzplan
- 63: Positionsschätzung
- 65: Zustände
- 66: WiFi Signale
- 67: GSM Signale
- *t*₁: Zeitintervall 1
- *t*₂: Zeitintervall 2
- *t*₃: Zeitintervall 3
- *t*₄: Zeitintervall 4
- *ν*₁: Verbindung 1
- *ν*₂: Verbindung 2
- *ν*₃: Verbindung 3
- *ν*₄: Verbindung 4
- *s*₁: Station A
- *s*₂: Station B
- *s*₃: Station C
- *s*₄: Station D
- *s*₅: Station E
- Z1: BESCHLEUNIGEN
- Z2: STEHEN

## Patentansprüche

1. Vorrichtung zur Bestimmung mindestens einer Position eines mobilen Endgerätes (30, 30'), insbesondere eines Smartphones, umfassend
- mindestens eine Speichereinrichtung (34);
- eine Magnetometer-Sensoreinheit (31) zur Abgabe von Magnetometer-Sensordaten (60);
- eine Klassifikationseinheit (35);
- eine Positionsermittlungseinheit (33) zur Bestimmung der Position des mobilen Endgerätes (30, 30');
**dadurch gekennzeichnet, dass**
- die Klassifikationseinheit (35)
a) zur Ermittlung von Zuständen, insbesondere von Betriebszuständen, von mindestens einem Elektromotor (20) eines Fahrzeugs und/oder eines mittels mindestens eines Elektromotors angetriebenen Fahrzeugs (10), in dem das mobile Endgerät mitgeführt wird, unter Verwendung der Magnetometer-Sensordaten (60) und
b) zur Speicherung der ermittelten Zustände (61) in der mindestens einen Speichereinrichtung (34) ausgebildet ist; und
- die Positionsermittlungseinheit (33) dazu ausgebildet ist, die Zustände aus der mindestens
einen Speichereinrichtung (34) auszulesen und mit Hilfe der Zustände die
mindestens eine Position (63) des mobilen Endgerätes (30, 30') zu bestimmen,
**dadurch gekennzeichnet, dass**
die Zustände mindestens einen ersten Motorzustand und mindestens einen zweiten Motorzustand umfassen, wobei der erste Zustand angibt, dass an dem Elektromotor eine Antriebsspannung anliegt und/oder der zweite Zustand angibt, dass an dem Elektromotor keine Antriebsspannung anliegt.

2. Vorrichtung nach Anspruch 1,
**dadurch gekennzeichnet, dass**
die Positionsermittlungseinheit (33) zur Verwendung zusätzlicher Signale zur Bestimmung der mindestens einen Position des mobilen Endgerätes (30, 30') ausgebildet ist, insbesondere Signale von GSM Masten (68) und Signale von WiFi Zugangspunkten (66).

3. Anspruch nach Anspruch 2,
**dadurch gekennzeichnet, dass**
die Positionsermittlungseinheit (33) dazu ausgebildet ist, aus den zusätzlichen Signaldaten ein Maß für die Güte der Positionsschätzung zu berechnen.

4. Vorrichtung nach einem der vorhergegangenen Ansprüche,
**dadurch gekennzeichnet, dass**
die Positionsermittlungseinheit (33) dazu ausgebildet ist, die Position unter Verwendung einer
Sequentiellen Monte-Carlo Methode und/oder eines Dynamischen Bayesschen Netzes und/oder eines Kalman Filters zu bestimmen.

5. Vorrichtung nach einem der vorhergegangenen Ansprüche,
**gekennzeichnet dadurch, dass**
die Klassifikationseinheit (32) dazu ausgebildet ist, den Zustand des Elektromotors und/ oder
des mittels eines Elektromotors angetriebenen Fahrzeugs unter Verwendung einer Stützvektormaschine und/oder einer Linearen Diskriminanzanalyse zur Klassifikation zu bestimmen.

6. Vorrichtung nach einem der vorhergegangenen Ansprüche,
**dadurch gekennzeichnet, dass**
die Klassifikationseinheit (32) dazu ausgebildet ist, die Zustände aus einer endlichen Menge von
Zuständen mit einer Kardinalität von weniger als 10, insbesondere weniger als 5, ermittelt.

7. Vorrichtung nach einem der vorhergegangenen Ansprüche,
**dadurch gekennzeichnet, dass**
die Klassifikationseinheit (32) zur Ermittlung von mindestens einem ersten Feldzustand und mindestens einem zweiten Feldzustand ausgebildet ist, wobei der erste Feldzustand angibt, dass sich die gemessenen Werte unterhalb eines Schwellwertes befinden und der zweite Zustand angibt, dass sich die Werte oberhalb eines Schwellwertes befinden.

8. Vorrichtung nach einem der vorhergegangenen Ansprüche,
**dadurch gekennzeichnet, dass**
die Klassifikationseinheit (32) zur Ermittlung von mindestens einem ersten Fahrzeugzustand und mindestens einem zweiten Fahrzeugstand ausgebildet ist, wobei der erste Fahrzeugzustand angibt, dass das Fahrzeug beschleunigt und/oder der zweite angibt, dass das Fahrzeug steht.

9. Vorrichtung nach einem der vorhergegangenen Ansprüche,
**dadurch gekennzeichnet, dass**
das mobile Endgerät (30, 30') zur Speicherung von Magnetometer-Sensordaten (60) und Meta-Informationen, insbesondere von Zeitstempeln, ausgebildet ist, wobei die Meta-Informationen mit den Magnetometer-Sensordaten (60) in Beziehung zu setzen sind.

10. Vorrichtung nach einem der vorhergegangenen Ansprüche
**dadurch gekennzeichnet, dass**
die Positionsermittlungseinheit (33) dazu ausgebildet ist, zur Bestimmung der mindestens einen
Position des mobilen Endgerätes (30, 30') Netzdaten (62) zu empfangen, die
einen Netzplan repräsentieren, umfassend mindestens
- eine Vielzahl von Stationen;
- Verbindungen zwischen den Stationen;
und optional:
- Distanzen zwischen den Stationen;
- Fahrzeiten zwischen den Stationen.

11. Vorrichtung nach einem der vorhergegangenen Ansprüche,
**dadurch gekennzeichnet, dass**
die mindestens eine Speichereinrichtung (34) dazu ausgebildet ist, Daten zu speichern, die einen
charakteristischen Signalverlauf angeben, und dass die Klassifikationseinheit (35) dazu ausgebildet ist, diese Daten mit den Magnetometer-Sensordaten zu vergleichen, um die Zustände zu ermitteln.

12. Vorrichtung nach einem der vorhergegangenen Ansprüche, insbesondere nach Anspruch 11,
**dadurch gekennzeichnet, dass**
die mindestens eine Speichereinrichtung (34) Polynomkoeffizienten zur Repräsentation von charakteristischen Signalverläufen speichert.

13. Verfahren zur Bestimmung der Position eines mobilen Endgerätes (30, 30'), insbesondere mittels einer Vorrichtung nach einem der vorhergehenden Ansprüche, umfassend die Schritte:
- Detektieren von magnetischen und/oder elektrischen Felddaten eines Elektromotors (20);
- Speichern der magnetischen und/oder elektrischen Felddaten in einer mindestens einen Speichereinrichtung (34);
- Klassifizieren eines Zustandes des Elektromotors (20) unter Verwendung der gespeicherten Felddaten;
- Speichern der Zustände in der mindestens einen Speichereinrichtung (34);
- Bestimmen einer Position des mobilen Endgerätes mit Hilfe der in
der mindestens einen Speichereinrichtung (34) stehenden Zustände wobei die Zustände mindestens einen ersten Motorzustand und mindestens einen zweiten Motorzustand umfassen, wobei der erste Zustand angibt, dass an dem Elektromotor eine Antriebsspannung anliegt und/oder der zweite Zustand angibt, dass an dem Elektromotor keine Antriebsspannung anliegt.

14. Computerlesbares Speichermedium, das ausführbare Instruktionen aufweist, welche einen Computer dazu veranlassen, das Verfahren nach Anspruch 13 zu implementieren, wenn die Instruktionen ausgeführt werden.

## Claims

1. Apparatus for determining at least one position of a mobile terminal (30, 30'), in particular a smartphone, comprising
- at least one memory device (34);
- a magnetometer sensor unit (31) for delivering magnetometer sensor data (60);
- a classification unit (35);
- a position finding unit (33) for determining the position of the mobile terminal (30, 30');
**characterized in that**
- the classification unit (35) is designed
a) to ascertain states, in particular operating states, of at least one electric motor (20) of a vehicle and/or of a vehicle (10) that is driven by means of at least one electric motor, in which vehicle the mobile terminal is carried, by using the magnetometer sensor data (60) and
b) to store the ascertained states (61) in the at least one memory device (34); and
- the position finding unit (33) is designed to read the states from the at least one memory device (34) and to use the states to determine the at least one position (63) of the mobile terminal (30, 30'), **characterized in that**
the states comprise at least one first motor state and at least one second motor state, the first state indicating that a drive voltage is applied to the electric motor and/or the second state indicating that no drive voltage is applied to the electric motor.

2. Apparatus according to Claim 1,
**characterized in that** the position finding unit (33) is designed to use additional signals to determine the at least one position of the mobile terminal (30, 30'), in particular signals from GSM masts (68) and signals from WiFi access points (66).

3. Claim according to Claim 2,
**characterized in that**
the position finding unit (33) is designed to calculate a measure of the quality of the position estimation from the additional signal data.

4. Apparatus according to one of the preceding claims,
**characterized in that**
the position finding unit (33) is designed to determine the position by using a sequential Monte Carlo method and/or a dynamic Bayesian network and/or a Kalman filter.

5. Apparatus according to one of the preceding claims,
**characterized in that**
the classification unit (32) is designed to determine the state of the electric motor and/or of the vehicle driven by means of an electric motor by using a support vector machine and/or a linear discriminant analysis for classification.

6. Apparatus according to one of the preceding claims,
**characterized in that**
the classification unit (32) is designed to ascertain the states from a finite set of states having a cardinality of less than 10, in particular less than 5.

7. Apparatus according to one of the preceding claims,
**characterized in that**
the classification unit (32) is designed to ascertain at least one first field state and at least one second field state, the first field state indicating that the measured values are below a threshold value and the second state indicating that the values are above a threshold value.

8. Apparatus according to one of the preceding claims,
**characterized in that** the classification unit (32) is designed to ascertain at least one first vehicle state and at least one second vehicle state, the first vehicle state indicating that the vehicle is accelerating and/or the second indicating that the vehicle is stationary.

9. Apparatus according to one of the preceding claims,
**characterized in that**
the mobile terminal (30, 30') is designed to store magnetometer sensor data (60) and metainformation, in particular timestamps, the metainformation being able to be related to the magnetometer sensor data (60).

10. Apparatus according to one of the preceding claims,
**characterized in that**
the position finding unit (33) is designed to determine the at least one position of the mobile terminal (30, 30') by receiving network data (62) that represent a network map, comprising at least
- a multiplicity of stations;
- connections between the stations;
and optionally:
- distances between the stations;
- journey times between the stations.

11. Apparatus according to one of the preceding claims,
**characterized in that**
the at least one memory device (34) is designed to store data that indicate a characteristic waveform, and **in that** the classification unit (35) is designed to compare these data with the magnetometer sensor data in order to ascertain the states.

12. Apparatus according to one of the preceding claims, in particular according to Claim 11,
**characterized in that**
the at least one memory device (34) stores polynomial coefficients for representing characteristic waveforms.

13. Method for determining the position of a mobile terminal (30, 30'), in particular by means of an apparatus according to one of the preceding claims, comprising the steps of:
- detecting magnetic and/or electrical field data of an electric motor (20);
- storing the magnetic and/or electrical field data in at least one memory device (34);
- classifying a state of the electric motor (20) by using the stored field data;
- storing the states in the at least one memory device (34);
- determining a position of the mobile terminal with the aid of the states that are in the at least one memory device (34),
wherein the states comprise at least one first motor state and at least one second motor state, the first state indicating that a drive voltage is applied to the electric motor and/or the second state indicating that no drive voltage is applied to the electric motor.

14. Computer-readable storage medium containing executable instructions that cause a computer to implement the method according to Claim 13 when the instructions are executed.

## Revendications

1. Dispositif de détermination d'au moins une position d'un terminal mobile (30, 30'), notamment d'un Smartphone, ledit dispositif comprenant
- au moins un moyen de mémorisation (34) ;
- une unité formant capteur-magnétomètre (31) destinée à délivrer des données de capteur-magnétomètre (60) ;
- une unité de classification (35) ;
- une unité de détermination de position (33) destinée à déterminer la position du terminal mobile (30, 30') ;
**caractérisé en ce que**
- l'unité de classification (35) est conçue
a) pour déterminer des états, notamment des états de fonctionnement, d'au moins un moteur électrique (20) d'un véhicule et/ou d'un véhicule (10) qui est entraîné au moyen d'au moins un moteur électrique et dans lequel est embarqué le terminal mobile, à l'aide des données de capteur-magnétomètre (60) et
b) pour mémoriser les états déterminés (61) dans l'au moins un moyen de mémorisation (34) ; et
- l'unité de détermination de position (33) est conçue pour lire les états dans l'au moins un moyen de mémorisation (34) et pour déterminer l'au moins une position (63) du terminal mobile (30, 30') à l'aide des états,
**caractérisé en ce que**
les états comprennent au moins un premier état de moteur et au moins un deuxième état de moteur, le premier état indiquant qu'une tension d'entraînement est appliquée au moteur électrique et/ou le deuxième état indiquant qu'aucune tension d'entraînement n'est appliquée au moteur électrique.

2. Dispositif selon la revendication 1,
**caractérisé en ce que**
l'unité de détermination de position (33) est conçue pour utiliser des signaux supplémentaires afin de déterminer l'au moins une position du terminal mobile (30, 30'), en particulier des signaux des mâts GSM (68) et des signaux des points d'accès WiFi (66).

3. Revendication selon la revendication 2,
**caractérisé en ce que**
l'unité de détermination de position (33) est conçue pour calculer une mesure de la qualité de l'estimation de position à partir des données de signal supplémentaires.

4. Dispositif selon l'une des revendications précédentes,
**caractérisé en ce que**
l'unité de détermination de position (33) est conçue pour déterminer la position à l'aide d'une méthode de Monte Carlo séquentielle et/ou d'un réseau de Bayes dynamique et/ou d'un filtre de Kalman.

5. Dispositif selon l'une des revendications précédentes,
**caractérisé en ce que** l'unité de classification (32) est conçue pour déterminer l'état du moteur électrique et/ou du véhicule entraîné par un moteur électrique à l'aide d'une machine à vecteurs de support et/ou d'une analyse discriminante linéaire pour la classification.

6. Dispositif selon l'une des revendications précédentes,
**caractérisé en ce que** l'unité de classification (32) est conçue pour déterminer les états à partir d'un ensemble fini d'états de cardinalité inférieure à 10, notamment inférieure à 5.

7. Dispositif selon l'une des revendications précédentes,
**caractérisé en ce que**
l'unité de classification (32) est conçue pour déterminer au moins un premier état de champ et au moins un deuxième état de champ, le premier état de champ indiquant que les valeurs mesurées sont inférieures à une valeur seuil et le deuxième état indiquant que les valeurs sont supérieures à une valeur seuil.

8. Dispositif selon l'une des revendications précédentes,
**caractérisé en ce que**
l'unité de classification (32) est conçue pour déterminer au moins un premier état de véhicule et au moins un deuxième état de véhicule, le premier état de véhicule indiquant que le véhicule accélère et/ou le deuxième état de véhicule indiquant que le véhicule est à l'arrêt.

9. Dispositif selon l'une des revendications précédentes,
**caractérisé en ce que**
le terminal mobile (30, 30') est conçu pour mémoriser des données de capteur-magnétomètre (60) et des méta-informations, notamment des horodatages, les méta-informations étant liées aux données de capteur-magnétomètre (60).

10. Dispositif selon l'une des revendications précédentes,
**caractérisé en ce que**
l'unité de détermination de position (33) est conçue pour recevoir des données de réseau (62), représentant un plan de réseau, afin de déterminer l'au moins une position du terminal mobile (30, 30'), ledit plan de réseau comprenant au moins
- un grand nombre de stations ;
- des liaisons entre stations ;
et éventuellement :
- des distances entre les stations ;
- des temps de trajet entre les stations.

11. Dispositif selon l'une des revendications précédentes,
**caractérisé en ce que**
l'au moins un dispositif de mémorisation (34) est conçu pour mémoriser des données qui indiquent une évolution caractéristique du signal, et **en ce que** l'unité de classification (35) est conçue pour comparer ces données aux données de capteur-magnétomètre afin de déterminer les états.

12. Dispositif selon l'une des revendications précédentes, notamment selon la revendication 11, **caractérisé en ce que**
l'au moins un dispositif de mémorisation (34) mémorise des coefficients polynomiaux destinés à représenter des évolutions caractéristiques de signaux.

13. Procédé de détermination de la position d'un terminal mobile (30, 30'), notamment au moyen d'un dispositif selon l'une des revendications précédentes, ledit procédé comprenant les étapes suivantes :
- détecter des données de champ magnétique et/ou électrique d'un moteur électrique (20) ;
- mémoriser les données de champ magnétique et/ou électrique dans au moins un moyen de mémorisation (34) ;
- classifier un état du moteur électrique (20) à l'aide des données de champ mémorisées ;
- mémoriser les états dans l'au moins un moyen de mémorisation (34) ;
- déterminer une position du terminal mobile à l'aide des états se trouvant dans l'au moins un moyen de mémorisation (34), les états comprenant au moins un premier état de moteur et au moins un deuxième état de moteur, le premier état indiquant qu'une tension d'entraînement est appliquée au moteur électrique et/ou le deuxième état indiquant qu'aucune tension d'entraînement n'est appliquée au moteur électrique.

14. Support de mémorisation lisible par ordinateur, ledit support comprenant des instructions exécutables qui amènent un ordinateur à mettre en œuvre le procédé de la revendication 13 lorsque les instructions sont exécutées.
